**Europäisches Patentamt**

**European Patent Office**

**Office européen des brevets**

(19)

(11) Veröffentlichungsnummer: **0 324 105**

**A2**

(12) # EUROPÄISCHE PATENTANMELDUNG

(21) Anmeldenummer: **88120392.1**

(22) Anmeldetag: **07.12.88**

(51) Int. Cl.⁴: **G01D 5/16**

(30) Priorität: **14.01.88 DE 3800824**

(43) Veröffentlichungstag der Anmeldung:
**19.07.89 Patentblatt 89/29**

(84) Benannte Vertragsstaaten:
**BE DE FR GB SE**

(71) Anmelder: **Standard Elektrik Lorenz
Aktiengesellschaft
Lorenzstrasse 10
D-7000 Stuttgart 40(DE)**

(84) **DE**

Anmelder: **ALCATEL N.V.
Strawinskylaan 341 (World Trade Center)
NL-1077 XX Amsterdam(NL)**

(84) **BE FR GB SE**

(72) Erfinder: **Becker, Helmut, Dr.
Noriker Strasse 19
D-8500 Nürnberg(DE)**

(74) Vertreter: **Hösch, Günther, Dipl.-Ing. et al
Standard Elektrik Lorenz AG Patent- und
Lizenzwesen Postfach 30 09 29
D-7000 Stuttgart 30(DE)**

(54) **Vorrichtung mit wenigstens einem in einem Gehäuse angeordneten magnetfeldabhängigen Widerstand.**

(57) Bei einer Vorrichtung mit wenigstens einem in einem Gehäuse angeordneten magnetfeldabhängigen Widerstand als Magnetfeldsensor trägt das zu detektierende am magnetfeldabhängigen Widerstand vorbeibewegte Objekt einen Permanentmagneten, dessen Streufeld beim Vorbeibewegen am magnetfeldabhängigen Widerstand dessen Widerstandswert ändert. Zwecks Erzielung einer hohen Empfindlichkeit muß der Abstand magnetfeldabhängiger Widerstand - Permanentmagnet klein und die den magnetfeldabhängigen Widerstand schützende Gehäusewand dünn ausgebildet sein. Bei rauhem Betrieb ist diese Gehäusewand und der unmittelbar dahinter vorgesehene magnetfeldabhängige Widerstand der Gefahr der Zerstörung ausgesetzt.

Ein Permanentmagnet wird an der Gehäusewand des Sensors fest angeordnet und bietet einen erhöhten Schutz gegen Zerstörung des Sensors. Das vorbeibewegte Objekt besteht aus einem ferromagnetischen Material.

Der Sensor ist anwendbar für Einrichtungen zur Positionserkennung, Erkennung einer Richtung oder Drehrichtung und der Geschwindigkeit.

Fig. 2

# Vorrichtung mit wenigstens einem in einem Gehäuse angeordneten magnetfeldabhängigen Widerstand.

Die Erfindung bezieht sich auf eine Vorrichtung mit wenigstens einem in einem Gehäuse angeordneten magnetfeldabhängigen Widerstand gemäß dem Oberbegriff des Anspruchs 1.

Eine derartige Vorrichtung ist aus Volvo Technische Informationen 840323 bekannt. Diese enthält einen Sensor, der aus in einem Gehäuse untergebrachten magnetfeldabhängigen Widerständen besteht, und einen am vorbeibewegten Objekt angebrachten Permanentmagneten. Um eine große Empfindlichkeit zu erreichen, wird ein kleiner Abstand zwischen den magnetfeldabhängigen Widerständen und dem vorbeibewegten Teil, in diesem Fall dem Permanentmagneten, angestrebt. Der erforderliche geringe Abstand bedingt eine entsprechend dünn ausgebildete Gehäusewand des Sensors, die die magnetfeldabhängigen Widerstände schützt. Diese dünne Gehäusewand kann aber auch leicht eingedrückt werden, wodurch die auf einem zerbrechlichen Substrat aufgebrachten magnetfeldabhängigen Widerstände zerstört werden können.

Mit der Erfindung soll die Aufgabe gelöst werden, die Vorrichtung der genannten Art so auszugestalten, daß auch bei geringem Abstand des vorbeibewegbaren Teils ein guter Schutz der magnetfeldabhängigen Widerstände gewährleistet ist. Es soll also eine hohe Empfindlichkeit erzielt werden, ohne daß die Gefahr eine leichten Zerstörbarkeit der Vorrichtung besteht.

Gelöst wird diese Aufgabe durch die im Kennzeichen des Anspruchs 1 angegebenen Merkmale. Mit einer solchen Vorrichtung erhält man eine ausreichende Empfindlichkeit. Vermutlich ist dies darauf zurückzuführen, daß zwar das Streufeld eine geringe Feldliniendichte besitzt, dafür jedoch die Feldänderung durch ein vorbeibewegtes Teil größer ist. Durch den größeren Abstand zwischen Permanentmagnet und dem zu detektierenden Teil ist die Gefahr einer Beschädigung der Vorrichtung erheblich verringert.

Weitere vorteilhafte Einzelheiten der Erfindung sind in den Unteransprüchen angegeben und nachfolgend anhand eines in der Zeichnung dargestellten Ausführungsbeispiels beschrieben.

Es zeigen:

Fig. 1 die Seitenansicht der Vorrichtung gemäß dem Schnitt E-F der Fig. 2,

Fig. 2 die Draufsicht auf die Vorrichtung gemäß dem Schnitt A-B der Fig. 1,

Fig. 2a einen möglichen Feldlinienverlauf des Permanentmagneten,

Fig. 3 die Seitenansicht der Vorrichtung gemäß dem Schnitt E-F der Fig. 2 ohne den magnetfeldabhängigen Widerstand, die Zwischenplatte und den Permanentmagneten, und

Fig. 4 den Querschnitt der Vorrichtung gemäß dem Schnitt C-D der Fig. 2.

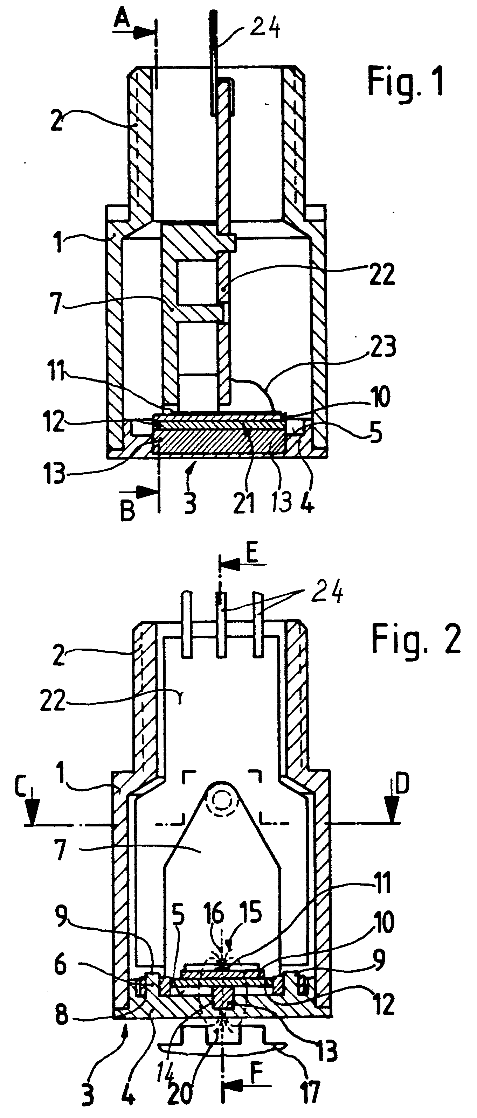

Wie den Fig. 1 bis 3 zu entnehmen, ist in einem vorzugsweise zylindrischen rohrförmigen Gehäuseteil 1 mit endseitigem Schraubansatz 2 an der Frontseite 3 eine Frontplatte 4, das Gehäuse abdichtend, befestigt. Dies kann beispielsweise durch Einrasten z.B. mittels Rasthaken und Vorsprüngen und/oder Einkleben der Frontplatte 4 erfolgen. Auf der Rückseite 5 der Frontplatte 4 sind Befestigungszapfen 6 vorgesehen. Auf diese ist ein mit Bohrungen 8 versehener Träger 7 aufsteckbar. Die starre Befestigung der beiden Bauelemente miteinander erfolgt durch Kleben oder Schweißen und/oder durch plastische, insbesondere thermoplastische Verformung der über die Bohrung 8 überstehenden Enden 9 der Befestigungszapfen 6.

Zwischen dem Träger 7 und der Rückseite 5 der Frontplatte 4 sind wenigstens ein auf einem Substrat 10 befindlicher magnetfeldabhängiger Widerstand 11, eine Abstandsplatte 12 und ein Permanentmagnet 13 hintereinander angeordnet. Letzterer ist, als Stabmagnet ausgebildet, in einer Aussparung 14 auf der Rückseite 5 der Frontplatte 4 befestigt. Anstelle der Aussparung können auch Befestigungsleisten oder Befestigungszapfen vorgesehen sein.

Bei der gezeigten Anordnung des Permanentmagneten 13 durchdringt ein Teil des rückwärtigen Streufeldes 15 den magnetfeldabhängigen Widerstand 11, welcher einen dem eventuell auftretenden Querfeld, d.h. einer Feldlinienkomponente senkrecht zur Polmittenlinie 16, entsprechenden Widerstandswert annimmt.

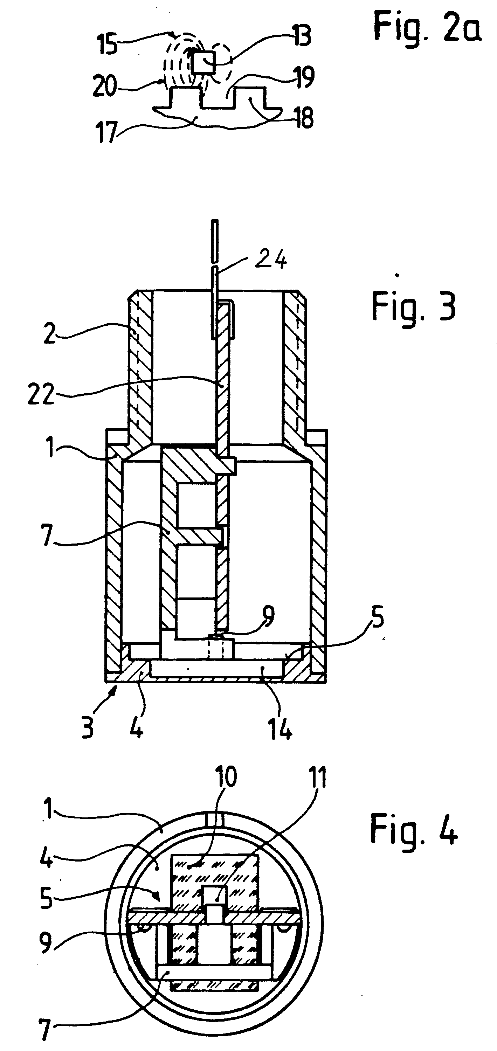

Ein an der Frontplatte 4 vorbeibewegtes gezahntes ferromagnetisches Teil 17 verändert den Streufluß, wenn beispielsweise ein Zahn 18 anstelle einer Lücke 19 in den Wirkungsbereich des äußeren Streufeldes 20 kommt (vgl. Fig. 2a). Wenn sich ein ferromagnetisches Teil im äußeren Streufeld 20 befindet, dann vergrößert sich auch die Querkomponente des rückwärtigen Streufeldes 15, in dem sich der magnetfeldabhängige Widerstand 11 befindet. Dies bewirkt eine deutliche Widerstandsänderung, in der Regel eine Widerstanderhöhung, des magnetfeldabhängigen Widerstandes 11.

In der Fig. 2 ist nur ein streifenförmiger magnetfeldabhängiger Widerstand 11 vorhanden. Es können aber auch mehrere, insbesondere zu einer Brückenschaltung zusammengeschaltete magnetfeldabhängige Widerstände vorgesehen sein. Die Breite des Permanentmagneten 13 ist vorzugsweise etwas größer als die des magnetfeldabhängigen Widerstandes. Insbesondere ragt er seitlich etwa um die halbe bis die ganze Breite des magnetfeldabhängigen Widerstandes 11 über diesen hinaus.

Es hat sich herausgestellt, daß es vorteilhaft für die Ansprechempfindlichkeit des Sensors ist, wenn zwischen dem beim Ausführungsbeispiel stabförmigen Permanentmagneten 13 und dem magnetfeldabhängigen Widerstand 11 bzw. dessen Substrat 10 ein Zwischenraum 21 vorhanden ist. Dieser beträgt vorteilhaft etwa 0,5 bis 2 mm. Beim Ausführungsbeispiel ist dieser vollständig durch die unmagnetische oder diamagnetische Abstandsplatte 12 ausgefüllt. Er kann jedoch auch nur teilweise oder gar nicht ausgefüllt sein.

Auf dem Träger 7 ist eine Schaltungsplatine 22, z.B. eine gedruckte Schaltung mit aufgelöteten elektrischen Bauteilen oder eine Dickfilmschaltung, befestigt. Die Schaltungsplatine 22 ist mit einer elektronischen Auswertschaltung versehen. Sie ist über Zuleitungen 23 mit dem bzw. den magnetfeldabhängigen Widerständen 11 elektrisch leitend verbunden. Die Anschlüsse 24 der Schaltungsplatine 22 ragen aus dem Gehäuseteil 1 heraus. Letzteres kann von der Seite des Schraubansatzes 2 aus mit isolierender Vergußmasse, insbesondere einem Epoxidharz oder Polyesterharz, gefüllt sein. Damit erhält man einen sehr stabilen Sensor, der auch an der Frontseite größere Belastungen aushalten kann.

## Ansprüche

1. Vorrichtung mit wenigstens einem in einem Gehäuse angeordneten magnetfeldabhängigen Widerstand zur Lagebestimmung eines an dem magnetfeldabhängigen Widerstand vorbeibewegten ferromagnetischen Teil, bei welcher der magnetfeldabhängige Widerstand von einem Permanentmagnet beeinflußt wird, **dadurch gekennzeichnet,** daß der Permanentmagnet (13) nahe dem magnetfeldabhängigen Widerstand (11) fest stehend in dem Gehäuse angeordnet ist.

2. Vorrichtung nach Anspruch 1, dadurch gekennzeichnet, daß das Gehäuse an seiner dem ferromagnetischen Teil zugewandten Seite mit einer Frontplatte (4) versehen ist, auf deren Innenseite (5) der Pemanentmagnet (13), der magnetfeldabhängige Widerstand (11) und ein Träger (7) für eine elektrische Auswerteschaltung befestigt sind.

3. Vorrichtung nach den Ansprüche 1 und 2, dadurch gekennzeichnet, daß zwischen Permanentmagnet (13) und magnetfeldabhängigem Widerstand (11) ein Zwischenraum (21) vorhanden ist.

4. Vorrichtung nach Anspruch 3, dadurch gekennzeichnet, daß der Zwischenraum (21) ganz oder teilweise von einer Abstandsplatte (12) aus nicht magnetisierbarem Werkstoff ausgefüllt ist.

5. Vorrichtung nach einem der Ansprüche 2 bis 4, dadurch gekennzeichnet, daß der Träger (7) steckbar an der Rückseite (5) der Frontplatte (4) befestigt ist.

6. Vorrichtung nach Anspruch 5, dadurch gekennzeichnet, daß an der Rückseite (5) Befestigungszapfen (6) und im Träger (7) den Befestigungszapfen (6) entsprechende Bohrungen (8) vorgesehen sind.

7. Vorrichtung nach Anspruch 6, dadurch gekennzeichnet, daß die Befestigungszapfen (6) durch die Bohrungen (8) hindurchragen und der überstehende Teil (9) der Befestigungszapfen (6) thermisch und/oder mechanisch verformt ist.

8. Vorrichtung nach einem der Ansprüche 2 und 7, dadurch gekennzeichnet, daß auf dem Träger (7) eine Schaltungsplatine (22) befestigt ist.

9. Vorrichtung nach einem der Ansprüche 1 und 8, dadurch gekennzeichnet, daß das Gehäuse mit einer Vergußmasse gefüllt ist.

Fig. 1

Fig. 2

Fig. 2a

Fig. 3

Fig. 4